# EUROPEAN PATENT SPECIFICATION

(11) **EP 3 001 277 B1**
(45) Date of publication and mention of the grant of the patent: **24.04.2019**
(21) Application number: 14801804.7
(22) Date of filing: 19.05.2014
(51) Int. Cl.: G06F 1/16, G06F 1/18, G06F 1/20

(54) **MOUNTING ASSEMBLY**
MONTAGEANORDNUNG
ENSEMBLE DE MONTAGE

(30) Priority: 21.05.2013 CN 201320277680 U
(43) Date of publication of application: 30.03.2016
(73) Proprietor: ZTE Corporation, Shenzhen, Guangdong 518057 (CN)
(72) Inventor: CHEN, Daxin, Shenzhen Guangdong 518057 (CN); ZHANG, Qing, Shenzhen Guangdong 518057 (CN); NIU, Kun, Shenzhen Guangdong 518057 (CN); DU, Xiaogang, Shenzhen Guangdong 518057 (CN); LIU, Changyou, Shenzhen Guangdong 518057 (CN); XU, Zhanbo, Shenzhen Guangdong 518057 (CN)
(74) Representative: Lavoix
(86) International application number: PCT/CN2014/077823
(87) International publication number: WO 2014/187299

(56) References cited:
- CN-A- 1 609 752
- CN-U- 202 008 591
- CN-U- 202 008 591
- CN-U- 203 422 701
- CN-Y- 201 007 917
- CN-Y- 201 007 917
- CN-Y- 201 392 495
- US-B1- 6 389 499
- US-B1- 7 386 796

## Description

### TECHNICAL FIELD

The disclosure relates to the field of hardware technologies, and in particular to a mounting assembly.

### BACKGROUND

Generally, devices with large heat release, such as a Central Processing Unit (CPU), need to be equipped with a radiator on a mainboard of a computer; to ensure installation strength, generally a radiator with big volume is fixed on the mainboard. Meanwhile, for some computers, for example, industrial computers, hard disks are mounted on the mainboard. Both the hard disk and the radiator have a big volume, thus, in the condition that a hard disk is mounted on the mainboard, the layout and structure of the hard disk and the radiator is a key point to be considered; not only the mainboard area occupied needs to be reduced, but also installation firmness and fine radiation will be guaranteed.

Normally, the radiator and the hard disk are deployed and installed separately. This installation method enables a simple structure and a convenient installation; however, multiple mounting holes need to be opened on the mainboard, which not only reduces the strength of the main board but also occupies the valuable mainboard area. Moreover, big volumes of the radiator and the hard disk are easy to block each other's radiation passage and thus impact the radiation effect.

In the related art, there is also a method to overlap the hard disk and the radiator, for example, overlap a hard disk and a CPU radiator on one same side of the mainboard; specifically, overlap a case provided with a front panel, a mainboard, an expansion board, a hard disk and a radiator. The mainboard is fixed on the lower part of the inner wall of the front panel, the radiator and the hard disk are overlapped on the mainboard from the bottom up, the top of the hard disk is aligned to the top of the front panel, the expansion board is located above the mainboard and is fixed on the inner wall of the front panel. However, this method has disadvantages as follows: 1: Since the hard disk and the radiator are mounted on one same side of the mainboard and the radiator is tightly pressed against the lower part of the hard disk, the heat released by the radiator will directly radiate on the bottom of the hard disk, thereby leading to the temperature rise of the hard disk and impacting the work of the hard disk. 2: The hard disk is located on the top of the radiator, far away the mainboard; the hard disk slot cannot be welded on the mainboard, the only way is to indirectly guide a hard disk interface signal to the mainboard via an extra expansion board; however, the signal path is long and signal is deteriorated after passing through several slots. 3: An extra fixing bracket needs to be designed for the hard disk. 4: The expansion board needs to be fixed by means of the mainboard panel, and an extra fixing device needs to be designed on the mainboard panel. 5: The overall structure is complex and has too many parts, with structure strength impacted.

CN 202008591 U discloses a cable-free compact strong embedded-type system controller, wherein a cable free design, a compact-type design and a strong-type design can be simultaneously realized in relatively small space.

CN 201007917 Y discloses a shock absorption main board.

### SUMMARY

To solve the above technical problem, an embodiment of the disclosure provides a mounting assembly, which enables a good radiation effect for a radiator while ensuring the strength of a mainboard, provides a solid connection and has a simple structure.

The technical solution of the embodiment of the disclosure is realized as follows:
an embodiment of the disclosure provides a mounting assembly, including: a mainboard, a radiator and a hard disk, wherein the radiator and the hard disk are respectively mounted on two sides of the mainboard, and the radiator is mounted on the side of the mainboard having a heating component;
wherein four corners of the radiator may be opened with radiator mounting holes respectively, and four corners of the hard disk may be opened with hard disk mounting holes corresponding to the radiator mounting holes respectively;
sizes of the hard disk mounting holes and intervals between the hard disk mounting holes may be same as sizes of the radiator mounting holes and intervals between the radiator mounting holes; and
the mainboard may be opened with mounting holes corresponding to the radiator mounting holes and the hard disk mounting holes.

In the above technical solution, wherein the hard disk mounting holes may be screw holes.

In the above technical solution, wherein the radiator and the hard disk may be fixed on two sides of the mainboard through a radiator fixing bolt and a hard disk fixing stud that are matched mutually.

In the above technical solution, wherein the radiator fixing bolt may consist of a screw and a bolt head located at a top of the screw, an upper surface of the bolt head may be provided with a crossing groove.

In the above technical solution, wherein the hard disk fixing stud may include: a screw hole matched with the screw; a thread matched with the hard disk mounting hole; wherein, the screw hole and the thread may be integrated.

In the above technical solution, the mounting assembly may further include a hard disk slot connected with the hard disk, wherein the hard disk slot is fixed on the mainboard.

In the above technical solution,

The disclosure has achieved advantages as follows:
(1) by mounting the radiator and the hard disk one two sides of the mainboard respectively, the embodiment of the disclosure not only reduces the mainboard area occupied but also guarantees a fine radiation effect;
(2) the radiator and the hard disk share mounting holes and mounting bolts in the embodiment of the disclosure, which reduces the number of holes opened on the mainboard and guarantees the strength of the mainboard;
(3) the disclosure needs no extra expansion board or fixing support, and is simply structured and securely mounted.

### BRIEF DESCRIPTION OF THE DRAWINGS

Fig. 1 is a diagram of each component of an embodiment of the disclosure when unassembled;
Fig. 2 is a stereo structure diagram of each component of an embodiment of the disclosure after assembled; and
Fig. 3 is a side view of each component of an embodiment of the disclosure after assembled.

### Description of marks on drawings:

1 a mainboard; 2 a radiator; 21 a radiator mounting hole; 3 a hard disk; 31 a hard disk mounting hole; 4 a mounting hole; 5 a radiator fixing bolt; 51 a screw; 52 a bolt head; 6 a hard disk fixing stud; 61 a screw hole; 62 a thread; 7 a hard disk slot.

### DETAILED DESCRIPTION

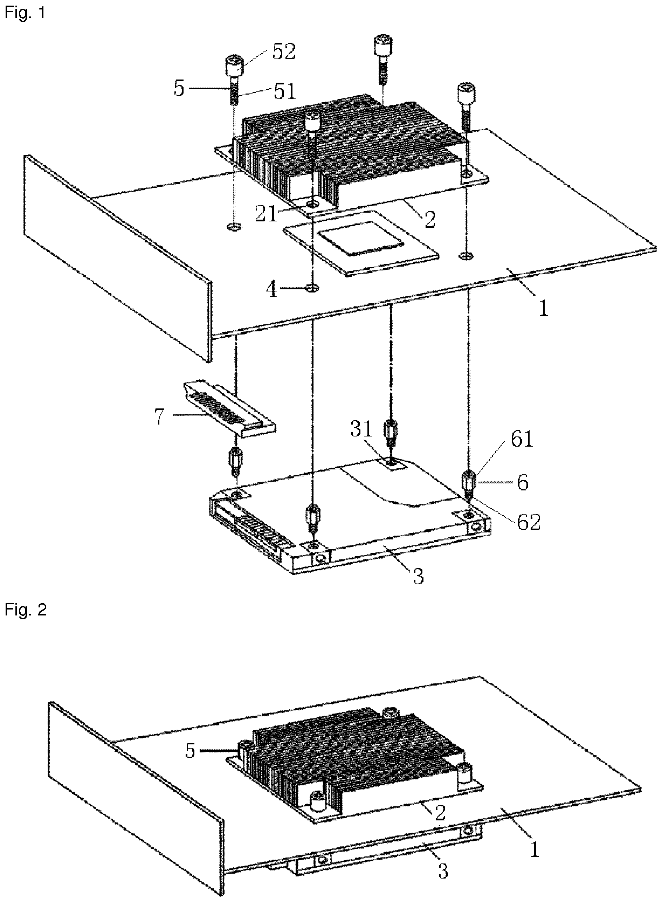

An embodiment of the disclosure provides a mounting assembly, as shown in Fig. 1 to Fig. 3, which includes: a mainboard 1, a radiator 2 and a hard disk 3, in which,
the mainboard 1 includes various necessary components needed by electrical devices corresponding to the mounting assembly, wherein these components include large number of heating components, for example, Central Processing Unit (CPU);
the radiator 2 is configured to assist the heating components to radiate heat; and
the hard disk 3 is configured to store data pre-stored in the electrical devices.

Specifically, as shown in Fig. 1, the radiator 2 and the hard disk 3 are respectively mounted on two sides of the mainboard 1, moreover, the mainboard 1 is opened with four mounting holes 4, through which the radiator 2 and the hard disk 3 are mounted on two sides of the mainboard 1 oppositely; in this way, the radiator 2 and the hard disk 3 share the mounting holes 4 opened on the mainboard, which reduces the area occupied by the radiator 2 and the hard disk 3 on the mainboard, saves space for the mainboard 1, reduces the number of holes opened on the mainboard and ensures the strength of the mainboard; the radiator 2 is mounted on the side of the mainboard 1 having a heating component, which improves the heat dispersion of the mainboard 1; in addition, the radiator 2 also can improve the heat dispersion of other heating components adjacent to the electrical devices corresponding to the mounting assembly.

In an embodiment, in order to make the radiator 2 and the hard disk 3 mounted on the mainboard 1 through only four mounting holes 4, correspondingly, four corners of the radiator 2 are opened with radiator mounting holes 21 corresponding to the mounting hole 4 respectively, and four corners of the hard disk 3 are opened with hard disk mounting holes 31 corresponding to the mounting hole 4 respectively. The radiator mounting holes 21 correspond to the hard disk mounting holes 31; sizes of the hard disk mounting holes 31 and intervals between the hard disk mounting holes are the same as sizes of the radiator mounting holes 21 and intervals between the radiator mounting holes. In this way, the radiator 2 and the hard disk 3 can be fixed on two sides of the mainboard through the radiator mounting hole 21, the mounting hole 4 and the hard disk mounting hole 31 in turn via adapted fasteners.

In an embodiment, the fastener selects a radiator fixing bolt 5 and a hard disk fixing stud 6; correspondingly, the radiator 2 and the hard disk 3 are mounted on two sides of the mainboard through the radiator fixing bolt 5 and the hard disk fixing stud 6 that are mutually matched; the radiator fixing bolt 5 consists of a screw 51 and a bolt head 52 located at a top of the screw, an upper surface of the bolt head is provided with a crossing groove; one end of the hard disk fixing stud 6 is a screw hole 61 while the other end is a thread 62 integrated with the screw hole 61. For a firm installation, as shown in Fig. 1 and Fig. 2, the screw hole 61 of the hard disk fixing stud 6 and the screw 51 of the radiator fixing bolt 5 are matched; the thread 62 of the hard disk fixing stud 6 is matched with the hard disk mounting hole 31; the hard disk mounting hole 31 is a screw hole.

In an embodiment, the mounting assembly further includes a hard disk slot 7 connected with the hard disk, wherein the hard disk slot 7 is fixed on the mainboard 1.

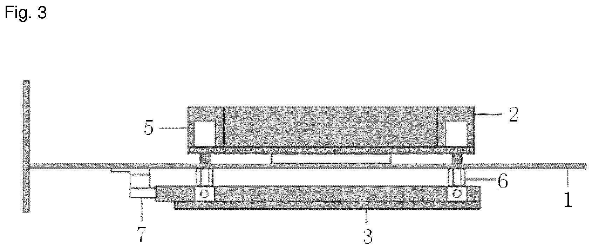

The specific mounting process is as follows: first, the hard disk slot is welded on the mainboard, the thread 62 of the hard disk fixing stud 6 is screwed into the thread of the hard disk mounting hole, the hard disk 3 screwed with the hard disk fixing stud 6 is inserted into the hard disk slot 7; then, the screw hole 61 of the hard disk fixing stud 6 is aligned to the mounting hole 4 of the mainboard 1, at the same time the radiator mounting hole 21 of the radiator 2 is aligned to the mounting hole 4 of the mainboard 1 too; finally, the radiator fixing bolt 5 passes through the radiator mounting hole 21 and the mounting hole 4 in turn and then is screwed into the screw hole of the hard disk fixing stud 6, to complete the mounting assembly shown in Fig. 2 and Fig. 3.

## Claims

1. A mounting assembly, comprising: a mainboard (1), a radiator (2) and a hard disk (3), wherein the radiator (2) and the hard disk (3) are respectively mounted on two sides of the mainboard (1), and the radiator (2) is mounted on the side of the mainboard (1) having a heating component;
**characterised in that** four corners of the radiator (2) are opened with radiator mounting holes (21) respectively, and four corners of the hard disk (3) are opened with hard disk mounting holes (31) corresponding to the radiator mounting holes (21) respectively;
sizes of the hard disk mounting holes (31) and intervals between the hard disk mounting holes (31) are same as sizes of the radiator mounting holes (21) and intervals between the radiator mounting holes (21); and
the mainboard (1) is opened with mounting holes (4) corresponding to the radiator mounting holes (21) and the hard disk mounting holes (31).

2. The mounting assembly according to claim 1, wherein the hard disk mounting holes (31) are screw holes.

3. The mounting assembly according to claim 2, wherein the radiator (2) and the hard disk (3) are fixed on two sides of the mainboard (1) through a radiator fixing bolt (5) and a hard disk fixing stud (6) that are matched mutually.

4. The mounting assembly according to claim 3, wherein the radiator fixing bolt (5) consists of a screw (51) and a bolt head (52) located at a top of the screw, an upper surface of the bolt head (52) is provided with a crossing groove.

5. The mounting assembly according to claim 4, wherein the hard disk fixing stud (6) comprises:
a screw hole (61) matched with the screw (51);
a thread (62) matched with the hard disk mounting hole (31);
wherein, the screw hole (61) and the thread (62) are integrated.

6. The mounting assembly according to claim 5, further comprising a hard disk slot (7) connected with the hard disk (3), wherein the hard disk slot (7) is fixed on the mainboard (1).

## Patentansprüche

1. Montageanordnung, Folgendes umfassend: eine Hauptplatine (1), einen Radiator (2) und eine Festplatte (3), wobei der Radiator (2) und die Festplatte (3) jeweils an eine der zwei Seiten der Hauptplatine (1) montiert sind und der Radiator an die Seite der Hauptplatine (1) montiert ist, die eine sich erwärmende Komponente aufweist,
**dadurch gekennzeichnet, dass**
vier Ecken des Radiators (2) jeweils mit Radiatormontageöffnungen (21) geöffnet sind und vier Ecken der Festplatte (3) jeweils mit Festplattenmontageöffnungen (31) geöffnet sind, die den Radiatormontageöffnungen (21) entsprechen,
Größen der Festplattenmontageöffnungen (31) und Abstände zwischen den Festplattenmontageöffnungen (31) gleich den Größen der Radiatormontageöffnungen (21) und den Abständen zwischen den Radiatormontageöffnungen (21) sind und
die Hauptplatine (1) mit Montageöffnungen (4) geöffnet ist, die den Radiatormontageöffnungen (21) und den Festplattenmontageöffnungen (31) entsprechen.

2. Montageanordnung nach Anspruch 1, wobei die Festplattenmontageöffnungen (31) Schrauböffnungen sind.

3. Montageanordnung nach Anspruch 2, wobei der Radiator (2) und die Festplatte (3) an zwei Seiten der Hauptplatine (1) durch eine Radiatorbefestigungsschraube (5) und einen Festplatten-Befestigungsgewindebolzen (6) befestigt sind, die zusammenpassen.

4. Montageanordnung nach Anspruch 3, wobei die Radiatorbefestigungsschraube (5) aus einer Schraube (51) und einem Schraubenkopf (52) besteht, der sich an einer Spitze der Schraube befindet, wobei eine Oberseite des Schraubenkopfes (52) mit einer Querrille versehen ist.

5. Montageanordnung nach Anspruch 4, wobei der Festplatten-Befestigungsgewindebolzen (6) Folgendes umfasst:
einen Schrauböffnung (61), die zu der Schraube (51) passt,
ein Gewinde (62), das zur Festplattenmontageöffnung (31) passt,
wobei die Schrauböffnung (61) und das Gewinde (62) integriert sind.

6. Montageanordnung nach Anspruch 5, ferner einen Festplatten-Steckplatz (7) umfassend, der mit der Festplatte (3) verbunden ist, wobei der Festplatten-Steckplatz (7) an der Hauptplatine (1) befestigt ist.

## Revendications

1. Ensemble de montage comprenant : une carte mère (1), un radiateur (2) et un disque dur (3), dans lequel le radiateur (2) et le disque dur (3) sont respectivement montés sur deux côtés de la carte mère (1), et le radiateur (2) est monté sur le côté de la carte mère (1) ayant un composant chauffant ;
**caractérisé en ce que** :
les quatre coins du radiateur (2) sont ouverts avec des trous de montage de radiateur (21) respectivement, et les quatre coins du disque dur (3) sont ouverts avec les trous de montage de disque dur (31) correspondant aux trous de montage de radiateur (21) respectivement ;
les tailles des trous de montage de disque dur (31) et les intervalles entre les trous de montage de disque dur (31) sont les mêmes que les tailles des trous de montage de radiateur (21) et les intervalles entre les trous de montage de radiateur (21) ; et
la carte mère (1) est ouverte avec des trous de montage (4) correspondant aux trous de montage de radiateur (21) et aux trous de montage de disque dur (31).

2. Ensemble de montage selon la revendication 1, dans lequel les trous de montage de disque dur (31) sont des trous de vis.

3. Ensemble de montage selon la revendication 2, dans lequel le radiateur (2) et le disque dur (3) sont fixés sur deux côtés de la carte mère (1) par un boulon de fixation de radiateur (5) et un goujon de fixation de disque dur (6) qui sont mis mutuellement en correspondance.

4. Ensemble de montage selon la revendication 3, dans lequel le boulon de fixation de radiateur (5) se compose d'une vis (51) et d'une tête de boulon (52) positionnée au sommet de la vis, une surface supérieure de la tête de boulon (52) est prévue avec une rainure cruciforme.

5. Ensemble de montage selon la revendication 4, dans lequel le goujon de fixation de disque dur (6) comprend :
un trou de vis (61) correspondant à la vis (51) ;
un filetage (62) correspondant au trou de montage de disque dur (31) ;
dans lequel, le trou de vis (61) et le filetage (62) sont intégrés.

6. Ensemble de montage selon la revendication 5, comprenant en outre une fente de disque dur (6) raccordée au disque dur (3), dans lequel la fente de disque dur (7) est fixée sur la carte mère (1).
